# EUROPEAN PATENT APPLICATION

(11) **EP 3 064 086 A1**
(43) Date of publication of application: **07.09.2016**
(21) Application number: 15157760.8
(22) Date of filing: 05.03.2015
(51) Int. Cl.: A47B 47/00, F16B 7/04

(54) **A system of construction elements**

(71) Applicant: RDS Design APS, 3450 Allerød (DK)
(72) Inventor: Lassen, Peter Joakim, 3450 Allerød (DK)
(74) Representative: Chas. Hude A/S

(57) **Abstract**

The present invention relates to a system of construction elements, the system comprising a first construction element (1) having a predefined length (A) and comprising a first (2) and a second end (3), a connection member (4, 5, 6, 7, 8, 9, 10, 11) comprising a centre point (O), where a first end (12) and a second end (13) extend a predefined length (d) from the centre point (O), where the first (12) and second ends (13) of the connection member (4, 5, 6, 7, 8, 9, 10, 11) are adapted to be connected to the first (2) or second end (3) of the first construction element (1), and where said first end (12) of the connection member (4, 5, 6, 7, 8, 9, 10, 11) extends in a direction that is either in a parallel or orthogonal direction from the second end (13) of the connection member (4, 5, 6, 7, 8, 9, 10, 11), where the system further comprises a second construction element (1') having a predefined length (B) and a first (2') and a second end (3'), where a basis length (x) is defined by the distance between the centre points (O) of two connection members (4, 5, 6, 7, 8, 9, 10, 11) when being connected to the first construction element (1) having the predefined length (A), and where the distance between the centre points (O) of two connection members (4, 5, 6, 7, 8, 9, 10, 11) when being connected to the second construction element (1') is a multiple of said basis length (x). The invention further relates to a method of connecting a construction element (1, 1') and a connection member (4, 5, 6, 7, 8, 9, 10, 11).

## Description

The present invention relates to a system of construction elements, the system comprising
- A first construction element having a predefined length A and comprising a first and a second end,
- A connection member comprising a centre point, where a first end and a second end extend a predefined length d from the centre point, where the first and second ends of the connection member are adapted to be connected to the first or second end of the first construction element, and where said first end of the connection member extends in a direction that is either in a parallel or orthogonal direction from the second end of the connection member.

The present invention further relates to a method of connecting a construction element and a connection member.

Systems of construction elements in different shapes and sizes are widely used today. The system of construction elements may be used to visualise a new building construction or to make up the framework of a building structure, such as a wall, a scaffold or a shelf. However, the system of construction elements may also be used as a toy used by children. No matter the intended purpose the element systems all need to be simple to collect and stable in its construction so that children or unexperienced people may use it or so that it is fast to collect and so that it does not break apart easily or by accident. At the same time each of the element systems need to provide a flexible solution which allows the user to construct element systems of different sizes and shapes so that they may be adapted to the necessary needs.

To provide a simple and flexible system of construction elements different modifications and variants of element systems have been proposed. Examples include ES 2174657 A1 which relates to a modular system for constructing buildings, which can be used temporarily and then demounted. These buildings consist of various types of parts (frames, panels, bars, joints, bolts, etc.). The various types of parts may be connected and form rectangular modules, which may construct a whole range of different buildings. When demounting the buildings, the modules are separated and may be grouped in modular packs which may be transported, stored and maintained.

Thus, known systems of construction elements are complicated to assemble and construct and do not provide the user with flexibility in relation to size and shape.

In accordance with the invention, there is provided a system of construction elements, the system comprising
- a first construction element having a predefined length A and comprising a first and a second end,
- a connection member comprising a centre point, where a first end and a second end extend a predefined length d from the centre point, where the first and second ends of the connection member are adapted to be connected to the first or second end of the first construction element, and where said first end of the connection member extends in a direction that is either in a parallel or orthogonal direction from the second end of the connection member,
- where the system further comprises a second construction element having a predefined length B and a first and a second end,
- where a basis length is defined by the distance between the centre points of two connection members when being connected to the first construction element having the predefined length A, and
- where the distance between the centre points of two connection members when being connected to the second construction element is a multiple of said basis length.

When making use of a system of construction elements for e.g. constructing and/or visualising a building structure, it is advantageous that the system may result in at least both one dimensional and two dimensional building elements. Thus, the connection members may be arranged such that a first and a second end of the connection member are mutually oriented in a way such that they are adapted to project first construction elements in either parallel or orthogonal directions. When two first construction elements are connected to a connection member, said two first construction elements are either parallel or orthogonal. Thus, the user has freedom to choose if a building structure is to extend in one dimension or in two dimensions. Furthermore, the user has freedom to choose if the building structure is to be closed or open by either connecting all free ends of the connection members to a construction element or not.

Having connection members with at least a first and a second end and where said ends are adapted to be connected to the first construction element provides flexibility. The connection members may be connected to the first construction element, but may also be connected to second construction elements. Thus, the system of construction elements provides flexibility.

When providing a system where the distance between the centre points of two connection members being connected to a second construction element is a multiple of said basis length, it is assured that it is always possible to replace the first construction element in a system of construction elements by second construction elements or second and first construction elements depending on the number if first construction elements. Thus, by use of first construction elements and connection members with two or more orthogonal or parallel ends results in that a coordinate system may be defined in which the centre points of the connection members constitute the integer coordinate points of the coordinate system. Thus, a combination of second construction elements and connection members or second and first construction elements and connection members may always result in that the centre points of the connection members coinciding with a coordinate point in a coordinate system defined by the first construction elements and connection members.

Providing the possibility of replacing e.g. a number of first construction elements by second construction elements results in an increase in the stability and strength of the building element, as the number of connection members (and thus centre points) decrease.

Thus, the present invention provides a flexible and easy to operate system of construction elements.

Within the concept of the present invention, the outer periphery of the cross section of the construction elements and of the connection members may be any type of shapes such as square, rectangular, circular etc.

In an embodiment, the system can comprise at least one further construction element, where the distance between the centre points of two connection members when being connected to the at least one further construction element can be a multiple of said basis length.

Providing one further construction element where the distance between the centre points of two connection members when connected to the at least one further construction element may be a multiple of said basis length may result e.g. in an increase in stability of the system of construction elements. This may be the case when two first construction elements connected by a connection member with two ends extending in parallel directions are replaced by a second construction element.

As the distance between the centre points of two connection members when connected to the at least one further construction element may always be a multiple of said basis length, a length in the system of construction elements comprising several first construction elements having a predefined length A may be replaced by one or more construction elements having either a predefined length B or by one or more further construction elements or a combination of construction elements having different lengths and connection members. As long as the system of construction elements comprises construction elements for which the distance between the centre points of said two connection members when connected to the construction elements may be a multiple of said basis length, the centre points of said connection elements, will always coincide with a coordinate point in a coordinate system defined by construction elements with predefined length A and connection members. Thus, the connection member may be placed in whatever coordinate point by use of a combination of construction elements and connection members.

Furthermore, when making use of more than two different lengths of construction elements, the variety structures which may be made increases. Thus, the user obtains a larger degree of flexibility.

In an embodiment, the connection members can comprise three, four, five or six ends, where each end of the connection members can extend in a direction that is either in a parallel or orthogonal direction from the other ends.

Providing connection members which have more than two ends may e.g. have the advantage that more complex structures may be formed than when only connection member with two ends are used. If the connection members only have two ends, the possibilities in forming different structures may be limited to one dimension (i.e. when the ends of the connection members all extend in a direction that is in a parallel direction from the other) or two dimensions (i.e. when the ends of the connection members extend in a parallel or orthogonal direction from the other ends). When the connection member comprises three or four ends, the ends may extend in a direction that is either in a parallel or orthogonal direction from the other ends, and thus either all in the same plane or distributed in two orthogonal planes. Thus, the structure may be limited to two dimensions or three dimensions. For connection member comprising five or six ends, the ends always distribute in two orthogonal planes, i.e. extend in three dimensions. Obviously, having the ends extend in three dimensions has the advantage that even more complex structures may be formed compared to if the ends only extend in two dimensions.

Having the ends of the connection members extend in either parallel or orthogonal directions may result in that the centre points of the connection members may always coincide with one of the integer coordinate points in a coordinate system defined by construction elements having the length A and connection members (thus defining the basis length), the ends of which extend in parallel and/or orthogonal directions from each other depending on whether the coordinate system extend in one, two or three dimensions.

Thus, the present invention provides a user friendly and flexible system of construction elements.

In an embodiment, the ends of the connection members can be adapted to be releasa-bly connected to the ends of the construction elements. Thus, a structure e.g. a building structure or a shelf made of construction elements and connection members may be easily dismounted/taken apart when the user has no need for the structure any more. The construction elements and the connection members may then be used for constructing a new structure. The user may also have the need for amending the structure for which reason it is advantageous that the connection members may be adapted to be releasably connected to the ends of the construction elements.

In an embodiment, the construction elements can extend substantially linearly. Having substantially linear construction elements may results in a system of construction elements with a greater structural strength compared to a system where the construction elements are not substantially linear, as a substantially linear construction element may e.g. resist a larger axial force than a non-linear construction elements before deforming.

In an embodiment, the cross-sectional shapes of the construction elements and of the connection members can be substantially equal. Thus, the system of construction elements may form a uniform outer surface which for this reason may more easily and solidly receive and hold e.g. a plate if the framework of a shelf or a wall has been constructed.

In an embodiment, the ends of the connection members can each comprise a protrusion and the ends of the construction elements can each comprise a first recess part, the first recess parts can be adapted to receive and surround the protrusions.

Thus, an easy and simple way of connecting the connection members and the construction elements is provided. The user simply has to unite a protrusion and a recess, such as a cylindrical rod and a cylindrical recess/hole. Obviously, other shapes of the protrusions and first recess parts such as square or many sided are foreseen within the present invention.

The outer periphery of the cross section of the protrusion and the inner periphery of the cross section of the recess part may be substantially similar so that the protrusion and the first recess part engage completely, which may result in a strong/solid connection between the connection member and the construction element.

Furthermore, arranging the protrusion and the first recess part so that they do not extend beyond the outer surfaces of either the connection member or the construction element when connected has the advantage that the protrusion and the first recess part are not visible, and do not interfere with the system's ability to e.g. easily and solidly receive and hold e.g. a plate.

Obviously, it is foreseen within the present invention that the ends of the connection members may each comprise a recess part and the ends of the construction elements may each comprise a protrusion.

Thus, a simple way of connecting the construction elements and the connection members are provided.

In an embodiment, the protrusions can comprise a first and a second branch, being arranged so as to move elastically relative to each other.

Protrusions comprising a first and a second branch may be provided with the branches slightly diverging in the relaxed state, so that the free ends of the branches may be too far apart to be inserted directly into the first recess parts. When joining a protrusion and a first recess part, the user may thus have to firstly press the two branches towards each other. After the protrusion is inserted into the first recess part, the user releases the two branches after which the branches will move towards their initial position relative to each other (the relaxed state). Thus, there will be a frictional force between the protrusion and the first recess part, i.e. a static frictional force which has to be exceeded when starting to remove the protrusion from the first recess part and a dynamic frictional force to be exceeded during removal.

The two branches may also extend parallel to each other, but be spaced too far apart to be inserted directly into the first recess part without applying a force on the connection members and the construction elements. Thus, the user has to either press the two branches together before inserting the protrusion into the first recess part or arranging the protrusion adjacent the first recess part and then applying a force on the connection member and the construction element in a direction parallel with their respective longitudinal axes. Thus, there will be a frictional force between the protrusion and the first recess part which has to be exceeded both when they are connected and removed from each other, as explained above.

In an embodiment, the protrusions can comprise at least one tap element and the construction elements can comprise at least one second recess part, where the at least one second recess part of the construction elements can be adapted to receive said at least one tap element.

The at least one tap element may be provided on one of said at least first and second branch of the protrusions of the connection member and may be provided at the free end of the respective branch. The at least one tap element may have the shape of a protrusion extending orthogonal or with an angle to the longitudinal axis of the respective branch. Alternatively, the tap element may be curved or have a shape so as to be able to snap fit with the at least one second recess part. The at least one second recess part may be a hole with straight walls, or have the same shape as the tap element, or be arranged to snap fit with the tap element.

Providing said at least one tap element and at least one second recess part, where said at least one second recess part may be adapted to receive said at least one tap element may result in that said tap element and said second recess part engage with each other for which reason the connection member and the construction element will not disconnect unless intended. To disconnect the connection member and the construction element the user may have to actively disengage said tap element and said second recess part e.g. by pulling the connection member and the construction element from each other, by pressing the two branches of the protrusion towards each other or by moving the connection member and the construction element relative to each other.

Furthermore, said at least one tap element and at least one second recess part may be arranged relative to each other so that the connection member and the construction element are only oriented correctly relative to each other when said at least one tap element and at least one second recess part engage with each other. This may be relevant when the cross-sectional shape of the connection member and the construction element are not circular, but e.g. square for which reason they have to be rotated correct about their respective longitudinal axis relative to each other until the four surfaces of the connection member are parallel with each their respective surface of the four surfaces of the construction element.

In an embodiment, the protrusions of the connection members and the construction elements can each comprise a through-going hole arranged such that when a construction element and a connection member are connected their respective through-going holes can be arranged concentrically.

Having protrusions and construction elements comprising through-going holes which may be arranged concentrically when the construction elements and the connection members are connected may give the user the possibility of inserting an extended member, such as a pin or latch, in the through-going holes so that the connection member and the construction element may be locked relative to each other. Thus, the connection member and the construction element cannot be rotated relative to each other or be disconnected.

In accordance with the invention, there is further provided a method of connecting a construction element and a connection member, the method comprising the steps of
- arranging an end of a construction element adjacent to an end of a connection member,
- joining the end of the construction element with the end of the connection member,
- rotating the construction element relative to the connection member in a direction around the longitudinal axis of the connection member.

In an embodiment, joining the end of the construction element with the end of the connection member can comprise joining a protrusion of the connection member with a first recess part of the construction element so that the first recess part surrounds the protrusion.

In an embodiment, rotating the construction element relative to the connection member in a direction around the longitudinal axis of the connection member can comprise rotating the protrusion relative to the first recess part until at least one tap element of the protrusion is received by at least one second recess part of the construction element.

In an embodiment, the method can further comprise the steps of
- arranging a through-going hole of the protrusion concentric with a through-going hole of the construction element, and
- inserting an extended member, such as a pin or latch, in the concentric through-going holes.

The structure and function of the system of construction elements and the method of using it will be described in more detail below with references to exemplary embodiments shown in the drawings wherein,
Fig. 1 shows a first and a second construction element, and connection members comprising two to six ends.
Fig. 2 shows the first construction element connected to two connection members.
Fig. 3 shows an embodiment of first and second construction elements connected with several connection members, thus creating a closed two dimensional structure.
Fig. 4 shows an embodiment of construction elements connected with connection member, thus forming a closed two dimensional square structure.
Fig. 5 shows an embodiment of a protrusion and recess parts of a connection member and a construction element, respectively.

In the figures, the system of construction elements is shown comprising construction elements and connection members having a square cross-section. However, it should be understood that other cross-sections, such as circular, oval etc...are also intended within the scope of the present invention.

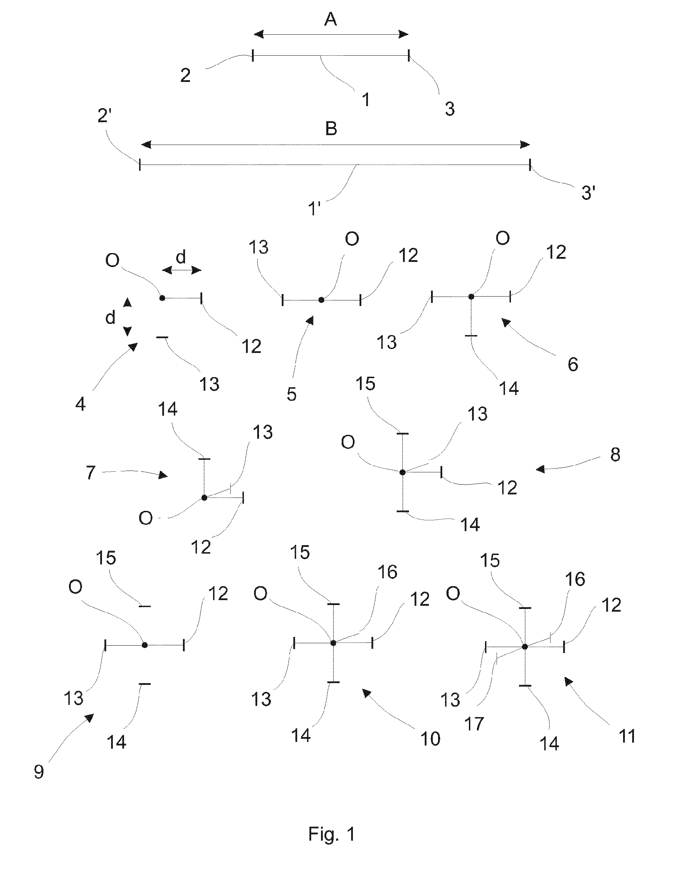

Fig. 1 shows a first 1 and a second construction element 1', and connection members comprising two to six ends.

The construction elements 1,1' may extend in a linear manner, however it is foreseen within the present invention that the construction elements may also extend in a nonlinear manner, such as in a curved, angled or oscillating manner.

The first construction element 1 may comprise a first 2 and second end 3 and have a predefined length A. Similarly, the second construction element 1' may comprise a first 2' and second end 3' and have a predefined length B. The first construction element 1 may be shorter than the second construction element 1'.

The connection member 4, 5, 6, 7, 8, 9, 10, 11 may comprise various numbers of ends, but may at least comprise a centre point O and at least a first 12 and a second end 13, which each extend a predefined length d from the centre point O. In the case where the connection member 4, 5 only comprises a first 12 and a second end 13, the first end 12 may extend in a direction that is orthogonal to the direction in which the second end 13 extends. However, the first end 12 may also extend in a direction that is parallel to the direction in which the second end 13 extends.

In a case where the connection member 6, 7 may comprise a first 12, second 13 and third 14 end, the ends 12, 13, 14 may either each extend in a direction that is orthogonal to the direction in which the other ends extend or the first 12 and second end 13 may be mutually orthogonal and the third end 14 may extend in a direction that is orthogonal to the direction in which the first 12 and third end 13 extend.

In a case where the connection member 8, 9 may comprise a first 12, second 13, third 14 and fourth end 15, the ends 12, 13, 14, 15 may each extend in a direction that is parallel or orthogonal to the direction in which the other ends extend, so that they may all extend in the same plane or in orthogonal planes.

In a case where the connection member 10 may comprise a first 12, second 13, third 14, fourth 15 and fifth end 16, the ends 12, 13, 14, 15, 16 may each extend in a direction that is parallel or orthogonal to the direction in which the other ends extend, so that they may extend in two orthogonal planes.

In a case where the connection member 11 may comprise a first 12, second 13, third 14, fourth 15, fifth 16 and sixth end 17, the ends 12, 13, 14, 15, 16, 17 may each extend in a direction that is parallel or orthogonal to the direction in which the other ends extend, so that they may extend in two orthogonal planes.

The at least first 12 and second end 13 of the connection member 4, 5, or in the case where the connection member 4, 5, 6, 7, 8, 9, 10, 11 comprises more than two ends 12, 13, then also the third 14, fourth 15, fifth 16 and sixth end 17 may be adapted to be connected to the first 2, 2' or second end 3, 3' of either of the first 1 or second construction element 1' or of the at least one further construction element.

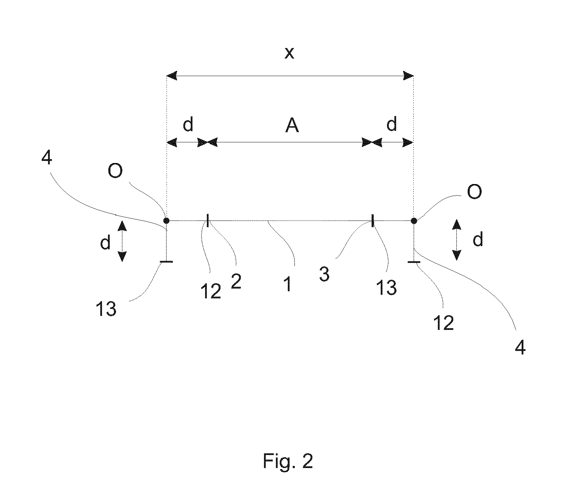

Fig. 2 shows the first construction element 1 connected to two connection members 4.

In the embodiment of Fig. 2, the two connection members 4 comprise a first 12 and a second end 13, where the first 12 extends in a direction that is orthogonal to the direction in which the second end 13 extends.

A first end 2 of the first construction element 1 is connected to a first end 12 of the connection member 4, and a second end 3 of the first construction element 1 is connected to a second end 13 of the connection member 4.

The distance between the centre points O of the two connection members 4 defines a basis length x. Thus, the basis length x define the minimum distance between the centre points O of connection members 4, 5, 6, 7, 8, 9, 10, 11 in a system of construction elements comprising first 1, second 1' and/or further construction elements and two or more connection members 4, 5, 6, 7, 8, 9, 10, 11. Thus, when the second construction element 1' is connected to two connection members 4, 5, 6, 7, 8, 9, 10, 11, the distance between the centre points O of said two connection members 4, 5, 6, 7, 8, 9, 10, 11 is a multiple of said basis length x. This means that the centre points O of said two connection members 4, 5, 6, 7, 8, 9, 10, 11 coincide with centre points O of two connection members 4, 5, 6, 7, 8, 9, 10, 11 if the second construction element 1' was to be replaced by first construction elements 1 connected with connection members.

Furthermore, when one or more further construction elements with lengths different from the lengths A and B of the first 1 and second construction element 1', respectively, are each connected to two connection members 4, 5, 6, 7, 8, 9, 10, 11, the centre points O of said two connection members 4, 5, 6, 7, 8, 9, 10, 11 coincide with the centre points O of two connection members 4, 5, 6, 7, 8, 9, 10, 11 if the one or more further construction elements were to be replaced by first construction elements 1 connected with connection members.

The one or more further construction elements may comprise a construction element having a length C and a construction element having a length D. Thus:
- the distance between the centre points O of two connection members 4, 5, 6, 7, 8, 9, 10, 11 when connected with the second construction element having a length B may be equal to two times the basis length x,
- the distance between the centre points O of two connection members 4, 5, 6, 7, 8, 9, 10, 11 when connected with the construction element having a length C may be equal to three times the basis length x, and
- the distance between the centre points O of two connection members 4, 5, 6, 7, 8, 9, 10, 11 when connected with the construction element having a length D may be equal to four times the basis length x.

Obviously, this means that the distance between the centre points O of two connection members 4, 5, 6, 7, 8, 9, 10, 11 when connected with the construction element having a length D may be equal to two times distance between the centre points O of two connection members 4, 5, 6, 7, 8, 9, 10, 11 when connected with the second construction element having a length B, or equal to one time the basis length x and one time the distance between the centre points O of two connection members 4, 5, 6, 7, 8, 9, 10, 11 when connected with the construction element having a length C. Similarly, the distance between the centre points O of two connection members 4, 5, 6, 7, 8, 9, 10, 11 when connected with the construction element having a length C may be equal to one time the basis length x and one time the distance between the centre points O of two connection members 4, 5, 6, 7, 8, 9, 10, 11 when connected with the second construction element having a length B. In schematic form this result in:

| | | | | |
|---|---|---|---|---|
| A + 2d | | | = | x |
| B + 2d | = | 2x | = | 2A + 4d |
| C + 2d | = | 3x | = | 3A + 6d |
| | = | x + B + 2d | = | A + B + 4d |
| D + 2d | = | 4x | = | 4A + 8d |
| | = | x + C + 2d | = | A + C + 4d |
| | = | 2(B + 2d) | = | 2B + 4d |

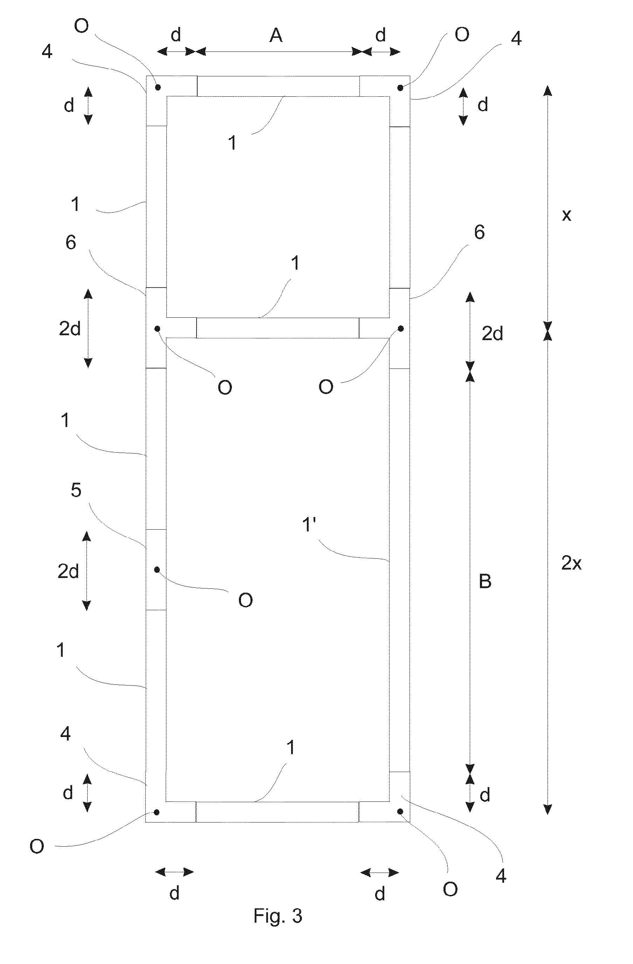

Fig. 3 shows an embodiment of first 1 and second construction elements 1' connected to several connection members 4, 5, 6, thus creating a closed two dimensional structure.

In the embodiment of Fig. 3, four first construction elements 1 form a square at the top of the two dimensional structure. The four construction elements 1 are connected by two connection members 4, the ends 12, 13 of which extend orthogonally to each other, and by two connection members 6, which comprises three ends 12, 13, 14 extending in the same plane. The distance between the centre points O of two of the connection members 4, 6 being connected to each their end of one of the first construction elements 1 is equal to the basis length x. Thus, the square may define the minimum closed structure which may be constructed in the system of construction elements.

At the lower part of the structure four first construction elements 1 and one second construction element 1' form a rectangular structure. The construction elements 1,1' may be connected by two connection members 4, the ends 12, 13 of which extend orthogonally to each other, and by two connection members 6, which comprises three ends 12, 13, 14 extending in the same plane, and finally by one connection member 5, the ends 12, 13 of which extend parallel to each other.

The two short sides of the rectangular structure each comprise one first construction element 1 and two connection members 4, 5, 6. The two long sides of the rectangular structure may each comprise two first construction elements 1 and three connection members 4, 5, 6 or one second construction element 1 and two connection members 4, 5,6.

The distance between the centre points O of the two connection members 4, 6 being connected to each their end 2, 3 of one of the first construction elements 1 on said two short sides are equal to the basis length x. The distance between the centre points O of the two connection members 4, 5, 6 each being connected to their end 2, 3 of each of the first construction elements 1 on the long side are equal to the basis length x. On the long side which comprises the second construction element 1', the distance between the centre points O of the two connection members 4, 6 each being connected to an end 2', 3' of the second construction elements 1' is equal to two times the basis length x.

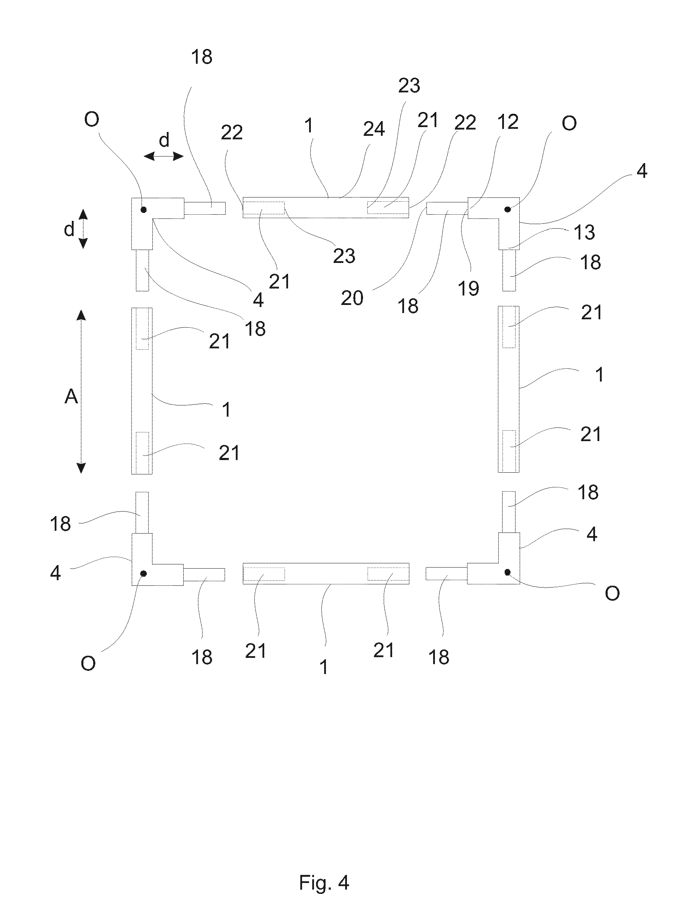

Fig. 4 shows an embodiment of construction elements 1 connected with connection elements 4, thus forming a closed two dimensional square structure.

In the embodiment of Fig. 4, the construction elements 1 and the connection elements 4 are not connected, but arranged in a position relative to each other so that they are ready to be connected.

Each of the four connection members 4 may comprise a centre point O and a first end 12 which extend in a direction that is in an orthogonal direction to the second end 13. The distance between the centre point O and each of the ends 12, 13 is the predefined length d. Each of the ends 12, 13 of the connection members 4 may comprise a protrusion 18. The protrusions 18 may comprise a first end 19 connected to an end 12, 13 of the connection member 4 and a second free end 20. The protrusion 18 may extend in a substantially linear manner. The cross section of the protrusion 18 may be circular, oval, square, many-sided etc., and the cross-sectional shape and size may be constant over the entire extension of the protrusion 18, but may also vary. Various cross-sectional shapes are foreseen within the present invention.

Each of the four first construction elements 1 may at each end 2, 3 comprise a first recess part 21, which may have a first open end 22 and a second closed end 23. However, it is also foreseen within the present invention that the first recess parts 21 may have a first 22 and a second open end 23, which would result in that the first recess parts 21 extend the entire length of the first construction elements 1. The outer surface 24 of the first construction elements 1 may completely surround the first recess parts 21 except for the first open ends 22. However, said outer surface 24 may also comprise one or more additional openings to the first recess parts 21. The periphery of the outer cross-sectional shape of the first recess parts 21 may be similar to the periphery of the outer cross-sectional shape of the protrusions 18 of the connection members 4. However, said cross-sectional shapes may also vary as long as the first recess parts 21 are adapted to receive the protrusions 18 or adapted to receive and surround the protrusions 18, so that the connection members 4 and the first construction elements 1 may be connected to each other. Thus, the periphery of the outer cross-sectional shape of the first recess part 21 may be equal to or larger than the periphery of the outer cross-sectional shape of the protrusions 18. Similarly, the length of the first recess part 21 may be equal to or larger than the length of the protrusions 18. Thus, when a connection member 4 and a first construction element 1 are connected, the ends 12, 13 of the connection member 4 come in contact with the ends 2, 3 of the first construction element 1, which results in that the distance between the centre points O of two connection members 4 connected to a first construction element 1 equals the basis length x.

Obviously, it is foreseen within the present invention that the connection members 5, 6, 7, 8, 9, 10, 11 comprising two 12, 13 to six ends 12, 13, 14, 15, 16, 17 may also comprise a protrusion 18 at each respective end 12, 13, 14, 15, 16, 17, and the second 1' and further construction elements may comprise a first recess part 21 at each respective end 2, 3; 2', 3'.

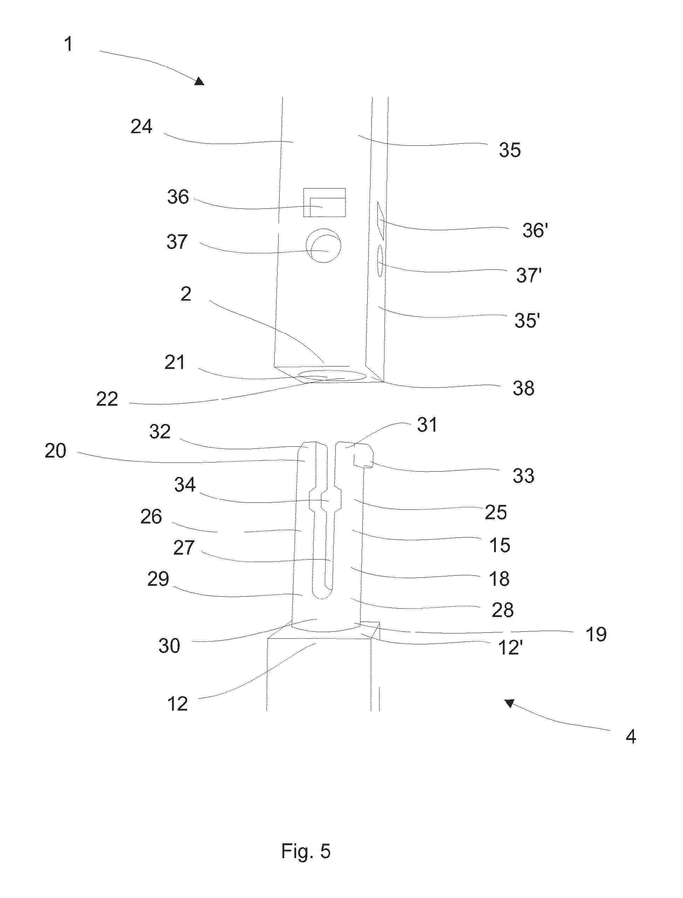

Fig. 5 shows an embodiment of a protrusion 18 and a first recess part 21 of a connection member 4 and a construction element 1, respectively. The connection member 4 and the construction element 1 are arranged adjacent to each other.

The first end 12 of the connection member 4 may comprise a protrusion 18 arranged at a first end surface 12' of the connection member 4. The protrusion 18 may comprise a first 25 and a second branch 26 extending substantially parallel to each other, and defining an open space 27 in between. The first 25 and second branch 26 each comprise a closed end 28, 29 where the first 25 and second branch 26 are connected via a bottom part 30, and a free end 31, 32. The first 25 and second branch 26 are arranged to move elastically relative to each other. Thus, the free ends 31, 32 of the first 25 and second branch 26 may be pressed towards each other whereby the open space 27 in between will be reduced. Thus, the diameter of the periphery of the common cross-sectional shape of the free ends 31, 32 of the first 25 and second branch 26 will be reduced. When releasing the first 25 and second branch 26 again, the first 25 and second branch 26 will move back to their initial positions relative to each other. Thus, the protrusion 18 may be produced in a material which allows this elastic behaviour of the first 25 and second branch 26, such as polymeric material, metal etc.

The first branch 25 may comprise at least one tap element 33. The tap element 33 may extend orthogonal to a longitudinal axis of the protrusion 18. The first 25 and second branch 26 may furthermore define a through-going hole 34 extending orthogonally to a longitudinal axis of the protrusion 18, and extending between the first 25 and second branch 26.

The first end 2 of the construction element 1 may comprise a first recess part 21 arranged at a first end surface 38 of the construction element 1 and extending along a longitudinal axis of the construction element 1.

The outer surface 24 of the construction element 1 may be made up of a first 35, second 35', third 35" (not shown) and fourth 35'" (not shown) planar surface. The construction element 1 may comprise at least one second recess part 36, 36', 36", 36'" each of which may extend from the first recess part 21 towards the outer surface 24 of the construction element 1. Said at least one second recess part 36, 36', 36", 36'" may be blind holes or through-going holes, the through-going holes penetrating said outer surface 24, and thus at least one of said planar surfaces 35, 35', 35", 35'" of the construction element 1. Each of said second recess part 36, 36', 36", 36'" being adapted to receive said at least one tap element 33, when the protrusion 18 of the connection element 1 and the first recess part 21 of the construction element 1 engage each other.

The construction element 1 may comprise at least one through-going hole 37, but in the embodiment of Fig. 5 may comprise a first 37 and a second through-going hole 37'. The though-going holes 37, 37' of the construction element 1 penetrate the construction element 1 and the first recess part 21 orthogonal to a longitudinal axis of the construction element 1. When the protrusion 18 of the connection member 4 and the first recess part 21 of the construction element 1 engage each other, the through-going hole 34 of the protrusion 18 and either the first 37 or the second through-going hole 37' of the construction element 1 may be arranged concentrically.

Obviously, the embodiment of Fig. 5 may also be applied for connection members 5, 6, 7, 8, 9, 10, 11 comprising two 12, 13 to six ends 12, 13, 14, 15, 16, 17 comprising a protrusion 18 at each end 12, 13, 14, 15, 16, 17, and for the second 1' and further construction elements comprising a first recess part 21 at each end 2, 3; 2', 3'.

Thus, connecting a construction element 1,1' and a connection member 4, 5, 6, 7, 8, 9, 10, 11 may comprise arranging an end 12, 13, 14, 15, 16, 17 of a connection member 4, 5, 6, 7, 8, 9, 10, 11 adjacent to an end 2, 3; 2', 3' of a construction element 1, 1' so that their longitudinal axes are parallel. Then the end 2, 3; 2', 3' of the construction element 1, 1' is joined with the end 12, 13, 14, 15, 16, 17 of the connection member 4, 5, 6, 7, 8, 9, 10, 11 after first pressing the first 25 and second branch 26 of the protrusion 18 together, and an end surface 38 of the construction element 1,1' and an end surface 12', 13', 14', 15', 16', 17' of the connection member 4, 5, 6, 7, 8, 9, 10, 11 touch. Rotating the construction element 1,1' relative to the connection member 4, 5, 6, 7, 8, 9, 10, 11 in a direction around the longitudinal axis of the connection member 4, 5, 6, 7, 8, 9, 10, 11 until the at least one tap element 33 of the protrusion 18 engage with the at least one second recess part 36, 36', 36", 36'" of the construction element 1,1' and the first 25 and second branch 26 move away from each other and thus relax. At the same time the through-going hole 34 of the protrusion 18 and either the first 37 or the second through-going hole 37' of the construction element 1 are arranged concentrically. An extended member, such as a pin, nail or latch, may then be inserted in and fill said concentric through-going holes 34; 37, 37' so as to prevent the first 25 and second branch 26 of the protrusion 18 from being moved towards each other and the construction element 1,1' and the connection member 4, 5, 6, 7, 8, 9, 10, 11 from disconnecting.

The construction element 1,1' and the connection member 4, 5, 6, 7, 8, 9, 10, 11 may be disconnecting by removing the extended member and rotating the construction element 1,1' relative to the connection member 4, 5, 6, 7, 8, 9, 10, 11 in a direction around the longitudinal axis of the connection member 4, 5, 6, 7, 8, 9, 10, 11 until the at least one tap element 33 of the protrusion 18 disengage from the at least one second recess part 36, 36', 36", 36'" of the construction element 1,1' and the first 25 and second branch 26 move towards each other. Then the construction element 1,1' and the connection member 4, 5, 6, 7, 8, 9, 10, 11 may be removed from each other.

Modifications and combinations of the above principles and designs are foreseen within the scope of the present invention.

## Claims

1. A system of construction elements, the system comprising
- a first construction element (1) having a predefined length (A) and comprising a first (2) and a second end (3),
- a connection member (4, 5, 6, 7, 8, 9, 10, 11) comprising a centre point (O), where a first end (12) and a second end (13) extend a predefined length (d) from the centre point (O), where the first (12) and second ends (13) of the connection member (4, 5, 6, 7, 8, 9, 10, 11) are adapted to be connected to the first (2) or second end (3) of the first construction element (1), and where said first end (12) of the connection member (4, 5, 6, 7, 8, 9, 10, 11) extends in a direction that is either in a parallel or orthogonal direction from the second end (13) of the connection member (4, 5, 6, 7, 8, 9, 10, 11),
**characterised in that**
- the system further comprises a second construction element (1') having a predefined length (B) and a first (2') and a second end (3'),
- where a basis length (x) is defined by the distance between the centre points (O) of two connection members (4, 5, 6, 7, 8, 9, 10, 11) when being connected to the first construction element (1) having the predefined length (A), and
- **in that** the distance between the centre points (O) of two connection members (4, 5, 6, 7, 8, 9, 10, 11) when being connected to the second construction element (1') is a multiple of said basis length (x).

2. A system of construction elements according to claim 1 **characterised in that** the system comprises at least one further construction element, where the distance between the centre points (O) of two connection members (4, 5, 6, 7, 8, 9, 10, 11) when being connected to the at least one further construction element is a multiple of said basis length (x).

3. A system of construction elements according to claims 1 or 2 **characterised in that** the connection members (4, 5, 6, 7, 8, 9, 10, 11) comprise three, four, five or six ends, where each end (12, 13, 14, 15, 16, 17) of the connection members (4, 5, 6, 7, 8, 9, 10, 11) extends in a direction that is either in a parallel or orthogonal direction from the other ends (12, 13, 14, 15, 16, 17).

4. A system of construction elements according to any of the preceding claims **characterised in that** the ends (12, 13, 14, 15, 16, 17) of the connection members (4, 5, 6, 7, 8, 9, 10, 11) are adapted to be releasably connected to the ends (2, 2', 3, 3') of the construction elements (1, 1').

5. A system of construction elements according to any of the preceding claims **characterised in that** the construction elements (1, 1') extend substantially linearly.

6. A system of construction elements according to any of the preceding claims **characterised in that** the cross-sectional shapes of the construction elements (1, 1') and of the connection members (4, 5, 6, 7, 8, 9, 10, 11) are substantially equal.

7. A system of construction elements according to any of the preceding claims **characterised in that** the ends (12, 13, 14, 15, 16, 17) of the connection members (4, 5, 6, 7, 8, 9, 10, 11) each comprise a protrusion (18) and the ends (2, 2', 3, 3') of the construction elements (1, 1') each comprise a first recess part (21), the first recess parts (21) being adapted to receive and surround the protrusions (18).

8. A system of construction elements according to claim 7 **characterised in that** the protrusions (18) comprise a first (25) and a second branch (26), being arranged so as to move elastically relative to each other.

9. A system of construction elements according to claims 7 or 8 **characterised in that** the protrusions (18) comprise at least one tap element (33) and the construction elements (1, 1') comprise at least one second recess part (36, 36', 36" , 36"'), where the at least one second recess part (36, 36', 36", 36'") of the construction elements (1, 1') being adapted to receive said at least one tap element (33).

10. A system of construction elements according to claims 7-9 **characterised in that** the protrusions (18) of the connection members (4, 5, 6, 7, 8, 9, 10, 11) and the construction elements (1, 1') each comprise a through-going hole (34, 37, 37') arranged such that when a construction element (1, 1') and a connection member (4, 5, 6, 7, 8, 9, 10, 11) are connected, their respective through-going holes (34,37,37') are arranged concentrically.

11. A method of connecting a construction element (1, 1') and a connection member (4, 5, 6, 7, 8, 9, 10, 11) according to any of the preceding claims, the method comprising the steps of
- arranging an end (2, 2', 3, 3') of a construction element (1, 1') adjacent to an end (12, 13, 14, 15, 16, 17) of a connection member (4, 5, 6, 7, 8, 9, 10, 11),
- joining the end (2, 2', 3, 3') of the construction element (1, 1') with the end (12, 13, 14, 15, 16, 17) of the connection member (4, 5, 6, 7, 8, 9, 10, 11),
- rotating the construction element (1, 1') relative to the connection member (4, 5, 6, 7, 8, 9, 10, 11) in a direction around the longitudinal axis of the connection member (4, 5, 6, 7, 8, 9, 10, 11).

12. A method according to claim 11, **characterised in that** joining the end (2, 2', 3, 3') of the construction element (1, 1') with the end (12, 13, 14, 15, 16, 17) of the connection member (4, 5, 6, 7, 8, 9, 10, 11) comprises joining a protrusion (18) of the connection member (4, 5, 6, 7, 8, 9, 10, 11) with a first recess part (21) of the construction element (1, 1') so that the first recess part (21) surrounds the protrusion (18).

13. A method according to claims 11 or 12, **characterised in that** rotating the construction element (1, 1') relative to the connection member (4, 5, 6, 7, 8, 9, 10, 11) in a direction around the longitudinal axis of the connection member (4, 5, 6, 7, 8, 9, 10, 11) comprises rotating the protrusion (18) relative to the first recess part (21) until at least one tap element (33) of the protrusion (18) is received by at least one second recess part (36,36',36",36'') of the construction element (1,1').

14. A method according to claims 11-13, **characterised in that** the method further comprises the steps of
- arranging a through-going hole (34) of the protrusion (18) concentric with a through-going hole (37, 37') of the construction element (1, 1'), and
- inserting an extended member, such as a pin or latch, in the concentric through-going holes (34, 37, 37').
